(19) Europäisches Patentamt
European Patent Office
Office européen des brevets

(11) **EP 3 027 435 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(21) Anmeldenummer: **14739843.2**

(22) Anmeldetag: **18.07.2014**

(51) Int Cl.:
**B60C 23/06** *(2006.01)*     **B60C 23/04** *(2006.01)*

(86) Internationale Anmeldenummer:
**PCT/EP2014/065477**

(87) Internationale Veröffentlichungsnummer:
**WO 2015/014636 (05.02.2015 Gazette 2015/05)**

(54) **VERFAHREN UND SYSTEM ZUR BESTIMMUNG EINER DRUCKABWEICHUNG ZWISCHEN EINEM SOLLREIFENDRUCK UND EINEM AKTUELLEN REIFENDRUCK FÜR EINEN REIFEN EINES FAHRZEUGS SOWIE ZUR BESTIMMUNG EINER RADLAST**

METHOD AND SYSTEM FOR DETERMINING A PRESSURE DEVIATION BETWEEN A TARGET TIRE PRESSURE AND A CURRENT TIRE PRESSURE FOR A TIRE OF A VEHICLE AND FOR DETERMINING A WHEEL LOAD

PROCÉDÉ ET SYSTÈME DE DÉTERMINATION D'UNE DIFFÉRENCE DE PRESSION ENTRE UNE PRESSION DE GONFLAGE IDÉALE ET UNE PRESSION DE GONFLAGE EFFECTIVE POUR UN PNEU D'UN VÉHICULE AINSI QUE DE DÉTERMINATION D'UNE CHARGE DE ROUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013 DE 102013108285**

(43) Veröffentlichungstag der Anmeldung:
**08.06.2016 Patentblatt 2016/23**

(73) Patentinhaber:
• **Volkswagen Aktiengesellschaft**
  **38440 Wolfsburg (DE)**
• **Scania CV AB**
  **151 87 Södertälje (SE)**

(72) Erfinder:
• **STEINMEYER, Simon**
  **38102 Braunschweig (DE)**

• **MEINECKE, Marc-Michael**
  **38524 Sassenburg (DE)**
• **DEGERMAN, Pär**
  **S-61336 Oxelösund (SE)**
• **DEEG, Carsten**
  **10587 Berlin (DE)**

(74) Vertreter: **Sticht, Andreas**
  **Kraus & Weisert**
  **Patentanwälte PartGmbB**
  **Thomas-Wimmer-Ring 15**
  **80539 München (DE)**

(56) Entgegenhaltungen:
EP-A1- 2 722 202     EP-A2- 1 880 874
US-A1- 2003 121 319     US-A1- 2010 180 677

EP 3 027 435 B1

**Beschreibung**

Die vorliegende Erfindung betrifft ein Verfahren und ein System, um eine Druckabweichung zwischen einem Sollreifendruck bzw. optimalen Reifendruck und einem aktuellen Reifendruck für einen Reifen eines Fahrzeugs zu bestimmen. Darüber hinaus betrifft die vorliegende Erfindung ein Verfahren und ein System, um eine Radlast auch während der Fahrt zu bestimmen.

Die US 2003/0121319 A1 beschreibt eine Vorrichtung zum Schätzen eines Reifenzustands. Dabei existieren mehrere Beziehungen zwischen einem dynamischen Lastreifenradius und dem Reifendruck, welche abhängig von der Radlast sind. Anhand dieser Beziehungen wird ein berechneter dynamischer Lastreifenradius in einen Reifendruck umgesetzt.

Die EP 1 880 874 A2 offenbart ein Verfahren und eine Vorrichtung, um bei einem abnormalen Reifendruck einen Alarm auszugeben. Dieser Alarm wird abhängig davon ausgegeben, ob sich auf die Räder einwirkende Lasten zwischen einem rechten und linken Rad ändern. Es wird erwähnt, dass sich ein dynamischer Lastradius abhängig von einer auf das Rad einwirkenden Last ändert.

Die US 2010/0180677 A1 beschreibt eine Vorrichtung, um das Gewicht einer von einem Fahrzeug beförderten Last abhängig von dem dynamischen Rollradius und dem Reifendruck zu berechnen.

Die EP 2 722 202 A1 offenbart, die Radlast abhängig von dem Reifendruck, einer Reifensteifigkeit, einem effektiven Rollradius und einem ursprünglichen Reifenradius zu schätzen.

Die DE 10 2009 057 578 A1 offenbart die Untersuchung einer Radlastverteilung einer Mehrzahl von Reifen eines Fahrzeugs anhand einer Latschlänge und eines Reifendrucks jedes Reifens.

Die DE 10 2009 057 579 A1 beschreibt die Ermittlung eines Sollreifendrucks anhand eines Istwerts und eines Sollwerts eines Latsch des Reifens.

Die DE 103 52 539 B4 offenbart die Überwachung eines luftbereiften Fahrzeugs mit Hilfe eines Verformungssensors.

Der Rollwiderstand eines Fahrzeugs bestimmt wesentlich die Energie, welche das Fahrzeug zum Bewältigen einer Fahrstrecke benötigt. Bei Personenwagen müssen ungefähr 20 % der Energie eingesetzt werden, um den Rollwiderstand auf Autobahnen zu überwinden. Im städtischen Bereich erhöht sich dieser Prozentsatz auf 40 %. Bei Lastkraftwagen ist dieser Prozentsatz noch höher. Auf Autobahnen sind bei Lastkraftwagen 66 % des Energieverbrauchs auf die Überwindung des Rollwiderstands zurückzuführen. Daher könnte eine Verringerung des Rollwiderstands um 3 % den gesamten Energieverbrauch bei Lastkraftwagen auf Autobahnen um 2 % reduzieren. Ein weiteres Kriterium für den optimalen Reifendruck ist eine Fahrstabilität und damit die Sicherheit des Fahrers sowie die Sicherheit aller anderen Verkehrsteilnehmer.

Daher stellt sich die vorliegende Erfindung die Aufgabe, einen Hinweis für einen Fahrer eines Fahrzeugs bereitzustellen, mittels welchem ein optimaler Reifendruck eingestellt werden kann.

Erfindungsgemäß wird diese Aufgabe durch ein Verfahren zur Bestimmung einer Druckabweichung zwischen einem Sollreifendruck und einem aktuellen Reifendruck nach Anspruch 1, durch ein Verfahren zur Bestimmung einer Radlast nach Anspruch 7 und durch ein System zur Bestimmung einer Druckabweichung zwischen einem Sollreifendruck und einem aktuellen Reifendruck nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung einer Druckabweichung zwischen einem Sollreifendruck bzw. optimalen Reifendruck und einem aktuellen Reifendruck für einen Reifen eines Fahrzeugs bereitgestellt. Dabei umfasst das erfindungsgemäße Verfahren folgende Schritte:

- Automatisches Ermitteln einer Radlast, welche hauptsächlich aufgrund der Beladung des Fahrzeugs auf den Reifen einwirkt.
- Automatisches Ermitteln eines dynamischen Reifenradius des Reifens. Dabei wird unter einem dynamischen Reifenradius derjenige Radius des Reifens verstanden, welchen der Reifen bei einer Geradeausfahrt des Fahrzeugs aufweist. Der dynamische Reifenradius kann beispielsweise über den Abrollumfang des Reifens bestimmt werden. Der Abrollumfang entspricht dabei der Strecke, welche der Reifen bei einer Umdrehung schlupffrei zurücklegt. Der Abrollumfang kann beispielsweise aus dem Quotienten der vom Fahrzeug zurückgelegten Fahrstrecke geteilt durch die Anzahl der Umdrehungen des Reifens berechnet werden.
- Automatisches Bestimmen der Druckabweichung in Abhängigkeit von der Radlast und von dem dynamischen Reifenradius.

Im Folgenden werden zahlreiche Varianten oder Ausführungsformen beschrieben, wie der Sollreifendruck und der aktuelle Reifendruck und damit die Druckabweichung in Abhängigkeit von der Radlast und von dem dynamischen Reifenradius bestimmt werden können.

Gemäß einer ersten erfindungsgemäßen Variante existiert eine Sollreifendruckfunktion, über welche abhängig von der Radlast der Sollreifendruck bestimmt werden kann. Dazu kann beispielsweise in einer Datenbank, auf welche das Fahrzeug Zugriff hat, für alle Reifenvarianten die entsprechende Sollreifendruckfunktion gespeichert sein, so dass das Fahrzeug bei Kenntnis der zu seinem Reifentyp gehörenden Sollreifendruckfunktion abhängig von der gemessenen Radlast den zugehörigen idealen Reifendruck bzw. Sollreifendruck bestimmen kann.

Erfindungsgemäß wird ein unbelasteter Reifenradius des Reifens vorgegeben, d. h. der unbelastete Reifenradius ist dem Fahrzeug bekannt. Der unbelastete Reifenradius kann beispielsweise bestimmt werden, wenn der Reifen auf dem Boden liegt, so dass seine Reifenaufstandsfläche keinen Kontakt zum Boden aufweist. Der aktuelle Reifendruck wird nun abhängig von der Radlast, von dem unbelasteten Reifenradius und von dem dynamischen Reifenradius mit Hilfe einer Reifensteifigkeitsfunktion berechnet.

Die Reifensteifigkeitsfunktion entspricht einer mathematischen Beschreibung der Reifencharakteristik des jeweiligen Reifens. Mittels der Reifensteifigkeitsfunktion kann die Reifensteifigkeit abhängig von der Radlast, dem aktuellen Reifendruck und gegebenenfalls von der aktuellen Geschwindigkeit des Fahrzeugs bestimmt werden.

In der folgenden Gleichung (1) ist ein Beispiel der Reifensteifigkeitsfunktion angegeben.

$$m = \frac{a}{f} \times \left( \frac{f}{p+k} \right)^{n} - b \times v \qquad (1).$$

Dabei entspricht m der Reifensteifigkeit, f der Radlast und v der Geschwindigkeit des Fahrzeugs. Bei a, b, k und n handelt es sich um Konstanten. Da die Konstante b in der Regel sehr klein ist, kann die Reifensteifigkeit m auch ohne den Term "b*v" bestimmt werden.

Die Reifensteifigkeit m kann auch über die Beziehung gemäß der folgenden Gleichung (2) bestimmt werden.

$$m = d / f \qquad (2)$$

Dabei entspricht f der Radlast, und d entspricht der Differenz zwischen dem unbelasteten Reifenradius $r_0$ und dem dynamischen Reifenradius $r_{dyn}$ gemäß der folgenden Gleichung (3).

$$d = r_0 - r_{dyn} \qquad (3)$$

Mit anderen Worten lässt sich bei Kenntnis der Radlast, des dynamischen Reifenradius und des unbelasteten Reifenradius die Reifensteifigkeit durch die vorab stehenden Gleichungen (2) und (3) berechnen. Über die Reifensteifigkeitsfunktion kann nun ausgehend von der berechneten Reifensteifigkeit und von der Radlast (sowie gegebenenfalls von der Geschwindigkeit) der aktuelle Reifendruck berechnet werden, indem die Reifensteifigkeitsfunktion zur Berechnung des aktuellen Reifendrucks umgestellt wird oder indem mittels der Reifensteifigkeitsfunktion ein Wert für den aktuellen Reifendruck bestimmt wird, für welchen die von der Reifensteifigkeitsfunktion berechnete Reifensteifigkeit der anderweitig berechneten Reifensteifigkeit entspricht.

Bezüglich der Reifensteifigkeitsfunktion gibt es erfindungsgemäß zwei Möglichkeiten.

• Die Reifensteifigkeitsfunktion wird vollständig (d. h. mit exakten Werten für alle Konstanten) vorgegeben, so dass bereits anhand der ersten Messwerte für die Radlast und den aktuellen Reifendruck sowie gegebenenfalls die aktuelle Geschwindigkeit des Fahrzeugs die entsprechende Reifensteifigkeit des Reifens berechnet werden kann.
• Die Reifensteifigkeitsfunktion wird ohne Kenntnis ihrer Konstanten (im Beispiel der Gleichung (1) wären dies a, b, k und n) vorgegeben. In diesem Fall werden die Konstanten anhand von Messwerten, welche für mehrere Zeitpunkte für die Radlast, den aktuellen Reifendruck und die Geschwindigkeit des Fahrzeugs ermittelt werden, derart erlernt oder bestimmt, dass z. B. die quadratische Norm eines Schätzfehlers minimiert wird. Dafür beobachtet beispielsweise ein Kalman-Filter (oder ein anderer geeigneter Filter) den Zusammenhang zwischen den gemessenen Werten über einen längeren Zeitraum. Für die vorgegebene Reifensteifigkeitsfunktion werden so die Konstanten bzw. Parameter bestimmt, was auch als Parameteridentifikation bezeichnet wird. Dabei ist es möglich, auch die Radlast oder den aktuellen Reifendruck quasi als Konstante bzw. Parameter anzusehen, so dass über die über den längeren Zeitraum gemessenen Messwerte nicht nur die Konstanten (z. B. a, b, k und n), sondern auch die Radlast bzw. der aktuelle Reifendruck bestimmt werden kann. Mit anderen Worten erlernt das erfindungsgemäße Verfahren zuerst die Konstanten der Reifensteifigkeitsfunktion, bevor die Reifensteifigkeitsfunktion insbesondere zur Berechnung der Reifensteifigkeit eingesetzt werden kann. Im Falle eines Kalman-Filters bilden die zu bestimmenden Konstanten oder Parameter der Reifensteifigkeitsfunktion den so genannten Kalman-Systemzustandsvektor. Dieser Vektor wird mittels Einbringung der Messwerte mit der Zeit rekursiv geschätzt.

Gemäß einer weiteren erfindungsgemäßen Ausführungsform wird die Reifensteifigkeit mit Hilfe der Reifensteifigkeitsfunktion bestimmt. Anschließend wird der unbelastete Reifenradius $r_0$ durch die folgende Gleichung (4) abhängig von dem dynamischen Reifenradius $r_{dyn}$, der Radlast f und der bestimmten Reifensteifigkeit m ermittelt.

$$r_0 = r_{dyn} + m*f \qquad (4)$$

Die Berechnung des unbelasteten Reifenradius bietet vorteilhafterweise eine Alternative zur Vorgabe des unbelasteten Reifenradius.

Erfindungsgemäß ist es auch möglich, dass der Sollreifendruck nicht vorgegeben, sondern bestimmt wird. Dies ist beispielsweise abhängig von einem Optimierungskriterium oder abhängig von einem Auslegungskriterium möglich, mit dessen Hilfe der Sollreifendruck bestimmt wird. Dieses Kriterium kann je nach Anwendungsfall unterschiedlich aussehen. Eine Möglichkeit besteht darin, ein festes Verhältnis $C_{Ideal}$ für das Verhältnis zwischen einem idealen dynamischen Reifenradius $r_{Ideal}$ und dem unbelasteten Reifenradius $r_0$ vorzugeben, wie dies anhand der folgenden Gleichung (5) der Fall ist.

$$C_{Ideal} = r_{Ideal}/r_0 \qquad (5)$$

Nach Bestimmung des idealen dynamischen Reifenradius insbesondere anhand der vorab beschriebenen Gleichung (5), kann der Sollreifendruck abhängig von dem idealen dynamischen Reifenradius mit Hilfe der Reifensteifigkeitsfunktion bestimmt werden.

Aus der Differenz zwischen dem idealen dynamischen Reifenradius $r_{Ideal}$ und dem unbelasteten Reifenradius $r_0$ lässt sich eine ideale Differenz $d_{Ideal}$ berechnen, wie dies anhand von Gleichung (6) gezeigt ist.

$$d_{Ideal} = r_0 - r_{Ideal} \qquad (6)$$

Über die vorab beschriebene Gleichung (2) lässt sich somit eine Sollreifensteifigkeit bestimmen. Indem schließlich die Reifensteifigkeitsfunktion entsprechend umgestellt wird, kann mit Hilfe der Reifensteifigkeitsfunktion bei Kenntnis der Radlast (und gegebenenfalls der Geschwindigkeit) anhand der bekannten Sollreifensteifigkeit der dazu passende Sollreifendruck bestimmt werden. Oder es wird mittels der Reifensteifigkeitsfunktion ein Wert für den Sollreifendruck bestimmt wird, für welchen die von der Reifensteifigkeitsfunktion berechnete Reifensteifigkeit der Sollreifensteifigkeit entspricht.

Im Rahmen der vorliegenden Erfindung wird auch ein Verfahren zur Bestimmung einer Radlast für einen Reifen eines Fahrzeugs bereitgestellt. Dabei umfasst dieses erfindungsgemäße Verfahren folgende Schritte:

- Ermitteln des aktuellen Reifendrucks, was beispielsweise mit einem in den Reifen integrierten Reifendrucksensor realisiert werden kann.
- Ermitteln eines dynamischen Reifenradius des Reifens.
- Vorgeben eines unbelasteten Reifenradius des Reifens im unbelasteten Zustand.
- Bestimmen einer Radlast für den Reifen in Abhängigkeit von dem aktuellen Reifendruck, von dem dynamischen Reifenradius und von dem unbelasteten Reifenradius mit Hilfe der Reifensteifigkeitsfunktion.

Anhand des dynamischen Reifenradius $r_{dyn}$ und des unbelasteten Reifenradius $r_0$ lässt sich die in Gleichung (7) beschriebene Beziehung zwischen der Reifensteifigkeit m und der Radlast f aufzeigen.

$$m = \frac{r_0 - r_{dyn}}{f} \qquad (7)$$

Eine zweite Beziehung zwischen der Reifensteifigkeit und der Radlast existiert über die Reifensteifigkeitsfunktion. Somit existieren zwei Gleichungen für die beiden Unbekannten m und f, so dass sowohl die Reifensteifigkeit als auch die Radlast berechnet werden können.

Der dynamische Reifenradius kann erfindungsgemäß beispielsweise bestimmt werden, indem die von dem Fahrzeug zurückgelegte Entfernung anhand von GPS-Daten bestimmt wird und diese zurückgelegte Entfernung dann durch die Anzahl von Umdrehungen des jeweiligen Reifens geteilt wird, welche während der Bewältigung dieser Entfernung von dem jeweiligen Reifen erfasst wurden. Die Anzahl der Umdrehungen des jeweiligen Reifens kann dabei beispielsweise anhand von so genannten "Wheel Ticks" bestimmt werden, wobei beispielsweise 100 Wheel Ticks pro Reifenumdrehung erfasst werden. Ein Wheel Tick entspricht dabei einem Messsignal, welches jeweils von einem Sensor erfasst wird, wenn sich der Reifen um einen vorbestimmten Drehwinkel gedreht hat.

Wie bereits vorab in der Definition des dynamischen Reifenradius beschrieben ist, kann der dynamische Reifenradius nur genau bestimmt werden, wenn der Reifen keinen Schlupf aufweist. Aus diesem Grund sollten bei der Bestimmung des dynamischen Reifenradius dynamische Fahrsituationen des Fahrzeugs (beispielsweise hartes Bremsen des Fahrzeugs, Beschleunigung mit durchdrehenden Reifen) ausgeklammert werden. Die Erkennung von solchen dynamischen Fahrsituationen kann beispielsweise mittels Beschleunigungssensoren oder durch Auswertung von Bremssignalen, ABS-Signalen oder ESP-Signalen erfolgen, so dass der dynamische Reifenradius nur in Fahrsituationen bestimmt wird, in welchen der Reifen keinen Schlupf aufweist. Darüber hinaus kann ein Kalman-Filter oder ein anderes geeignetes Filterverfahren eingesetzt werden, um die über ein vorbestimmtes Intervall erfassten Wheel Ticks mit erwarteten Wheel Ticks zu vergleichen, um Ausreißer zu erkennen und um diese bei der Bestimmung des dynamischen Reifenradius nicht zu berücksichtigen.

Darüber hinaus kann der dynamische Reifenradius des Reifens des Fahrzeugs abhängig von einer Gierrate $\dot{\Psi}$ des Fahrzeugs, einer Drehgeschwindigkeit $DG_1$ des Reifens, einer weiteren Drehgeschwindigkeit $DG_2$ eines weiteren Reifens des Fahrzeugs und einem Abstand s zwischen dem Reifen und dem weiteren Reifen gemäß folgender Gleichung (8) ermittelt werden, wie es in DE 10 2006 020 490 A1 beschrieben ist..

$$r_{dyn} = \frac{1}{2\pi} \times \frac{\dot{\Psi} \times s}{DG_2 \times X_1 - DG_1} \qquad (8)$$

Dabei gibt $X_1$ ein Umfangsverhältnis an, welches mit Hilfe der folgenden Gleichung (9) bei einer Geradeausfahrt des Fahrzeugs aus einem zeitlichen Integral der ersten Drehgeschwindigkeit und einem zeitlichen integral der zweiten Drehgeschwindigkeit berechnet werden kann.

$$X_1 = \frac{\int DG_1}{\int DG_2} \qquad (9)$$

Erfindungsgemäß wirkt die gemessene oder berechnete Radlast hauptsächlich aufgrund der Beladung des Fahrzeugs auf den jeweiligen Reifen ein. Die Druckabweichung zwischen dem aktuellen Reifendruck und dem Sollreifendruck kann für die aktuelle Radlast für jeden Reifen des Fahrzeugs bestimmt werden. Beispielsweise können diese beiden Werte (d. h. der Sollreifendruck und der aktuelle Reifendruck) über eine entsprechende Schnittstelle dem Fahrer des Fahrzeugs übermittelt werden. Zur Motivation des Fahrers, den aktuellen Reifendruck dem Sollreifendruck anzugleichen, kann darüber hinaus der zusätzliche Energieverbrauch, welcher aufgrund des falsch eingestellten Reifendrucks anfällt, dargestellt werden. (z. B. "2 % (0,4 l/100 km) höherer Energieverbrauch aufgrund zu geringen Luftdrucks"). Darüber hinaus kann bei Überschreitung eines bestimmten Energieverbrauch-Schwellenwerts eine Warnung für den Fahrer erzeugt werden, um den Fahrer vor dem falsch eingestellten Reifendruck zu warnen. Weiterhin kann der Fahrer vor einem Sicherheitsrisiko aufgrund des falschen Reifendrucks gewarnt werden. Schließlich ist es erfindungsgemäß auch möglich, den Reifendruck des jeweiligen Reifens automatisch derart zu verändern, dass er dem Sollreifendruck entspricht.

Um eine Anpassung des Reifendrucks an den Sollreifendruck bei jeder Änderung der Radlast zu vermeiden, kann eine durchschnittliche, maximale oder typische Radlast für den jeweiligen Reifen bestimmt werden. In diesem Fall kann die Druckabweichung oder der Sollreifendruck abhängig von dieser Radlast (und nicht von der jeweils aktuellen Radlast) bestimmt werden.

Im Rahmen der vorliegenden Erfindung wird auch ein System zur Bestimmung einer Druckabweichung zwischen einem Sollreifendruck und einem aktuellen Reifendruck für einen Reifen eines Fahrzeugs bereitgestellt. Dabei ist das erfindungsgemäße System, welches eine Steuerung umfasst, ausgestaltet, um den dynamischen Reifenradius und die Radlast für den Reifen zu ermitteln. Abhängig von dem dynamischen Reifenradius und der Radlast bestimmt das erfindungsgemäße System dann mit Hilfe der Steuerung die Druckabweichung.

Die Vorteile des erfindungsgemäßen Systems entsprechen im Wesentlichen den Vorteilen des erfindungsgemäßen Verfahrens, welche vorab im Detail ausgeführt sind, so dass hier auf eine Wiederholung verzichtet wird.

Das erfindungsgemäße System ist insbesondere zur Durchführung jeder Variante oder Ausführungsform des erfindungsgemäßen Verfahrens ausgestaltet.

Darüber hinaus wird im Rahmen der vorliegenden Erfindung auch ein weiteres System zur Bestimmung einer Radlast für einen Reifen eines Fahrzeugs bereitgestellt. Dabei ist das weitere System, welches eine Steuerung umfasst, ausgestaltet, um über einen Reifendrucksensor des weiteren Systems den aktuellen Reifendruck zu ermitteln und um den dynamischen Reifenradius zu bestimmen. Bei Kenntnis des unbelasteten Reifenradius bestimmt das weitere System die Radlast abhängig von dem aktuellen Reifendruck, von dem dynamischen Reifenradius und von dem unbelasteten Reifenradius mit Hilfe der Reifensteifigkeitsfunktion.

Darüber hinaus wird erfindungsgemäß ein Fahrzeug bereitgestellt, welches ein erfindungsgemäßes System und/oder ein weiteres erfindungsgemäßes System umfasst.

Im Folgenden soll die vorliegende Erfindung anhand von sechs möglichen erfindungsgemäßen Varianten noch einmal aus einer anderen Sicht erläutert werden.

Variante 1

Bei der ersten Variante werden die Radlast und der aktuelle Reifendruck gemessen. Anhand einer vorgegebenen Funktion wird der Sollreifendruck abhängig von der Radlast bestimmt. Diese Funktion kann beispielsweise in einer Datenbank, auf welche das Fahrzeug Zugriff hat, für alle Reifenvarianten abgespeichert sein. Als Untervariante kann diese Funktion auch so aufgebaut sein, dass sie für alle zugelassenen Reifentypen gilt.

Variante 2

Bei dieser Variante wird der aktuelle Reifendruck beispielsweise mit einem im Reifen integrierten Reifendrucksensor gemessen und der dynamische Reifenradius bestimmt. Anhand einer vorgegebenen Funktion (siehe Variante 1) wird der Sollreifendruck abhängig von der Radlast bestimmt. Im Gegensatz zur Variante 1 wird bei der Variante 2 die Radlast allerdings nicht gemessen, sondern berechnet. Abhängig von dem unbelasteten Reifenradius, welcher bei dieser Variante als bekannt vorausgesetzt wird, und dem dynamischen Reifenradius existiert eine erste Beziehung zwischen der Radlast und der Reifensteifigkeit, wie es in Gleichung (7) vorab beschrieben ist. Darüber hinaus existiert eine zweite Beziehung zwischen der Radlast und der Reifensteifigkeit über eine vorgegebene Reifensteifigkeitsfunktion. Über diese beiden Beziehungen lassen sich sowohl die Radlast als auch die Reifensteifigkeit bestimmen.

Variante 3

Bei der dritten Variante wird die Radlast gemessen und der dynamische Reifenradius bestimmt. Anhand einer vorgegebenen Funktion (siehe Variante 1) wird wiederum der Sollreifendruck abhängig von der Radlast bestimmt. Im Vergleich zur Variante 2 wird bei dieser Variante zwar die Radlast gemessen, aber der aktuelle Reifendruck ist nicht bekannt. Über die Gleichung (7) kann die Reifensteifigkeit abhängig von der Radlast, dem unbelasteten Reifenradius, welcher bei dieser Variante als bekannt vorausgesetzt wird, und dem dynamischen Reifenradius berechnet werden. Indem die Reifensteifigkeitsfunktion nach dem aktuellen Reifendruck umgestellt wird, kann der aktuelle Reifendruck über die Reifensteifigkeitsfunktion abhängig von der Radlast und von der Reifensteifigkeit sowie gegebenenfalls von der Geschwindigkeit des Fahrzeugs bestimmt werden.

Variante 4

Wie bei der Variante 3 wird bei dieser Variante die Radlast gemessen und der dynamische Reifenradius bestimmt. Wiederum wird anhand der vorgegebenen Funktion (siehe Variante 1) der Sollreifendruck abhängig von der Radlast bestimmt. Bei dieser Variante wird eine Reifensteifigkeitsfunktion vorgegeben, bei welcher die Konstanten noch nicht bekannt sind. Daher werden diese Konstanten beispielsweise mit Hilfe eines Kalman-Filters (oder eines anderen geeigneten Filters) über den Zusammenhang zwischen gemessenen Werten für die Radlast und die Geschwindigkeit des Fahrzeugs zusammen mit dem aktuellen Reifendruck bestimmt. Der aktuelle Reifendruck wird bei dieser Variante also nicht gemessen, sondern quasi als eine Konstante der Reifensteifigkeitsfunktion interpretiert. Die Geschwindigkeit des Fahrzeugs sollte bei der Bestimmung der Konstanten berücksichtigt werden. Wenn die Konstanten einmal bestimmt worden sind, kann bei einer späteren Anwendung der Reifensteifigkeitsfunktion die Geschwindigkeit vernachlässigt werden, da der zu berechnende aktuelle Reifendruck bei allen Geschwindigkeiten gelten muss.

Es sei darauf hingewiesen, dass bei dieser Variante die Bestimmung der Druckabweichung zwischen dem Sollreifendruck und dem aktuellen Reifendruck erst nach einer gewissen Zeitspanne erfolgen kann, in welcher die Konstanten der Reifensteifigkeitsfunktion erlernt werden müssen.

Variante 5

Bei dieser Variante werden die Radlast und der aktuelle Reifendruck gemessen sowie der dynamische Reifenradius bestimmt. Wie bei Variante 4 wird die Reifensteifigkeitsfunktion quasi zuerst erlernt. Anschließend kann mit dieser Reifensteifigkeitsfunktion die Reifensteifigkeit abhängig von der Radlast, dem aktuellen Reifendruck und der Geschwindigkeit des Fahrzeugs bestimmt werden. Über die vorab beschriebene Gleichung (4) kann der unbelastete Reifenradius abhängig von der Radlast, dem dynamischen Reifenradius und der Reifensteifigkeit berechnet werden. Im Gegensatz zu den vorab beschriebenen Varianten ist bei dieser Variante keine Funktion zur Bestimmung des Sollreifendrucks abhängig von der Radlast vorgegeben. Stattdessen wird der Sollreifendruck über ein Optimierungskriterium oder Auslegungskriterium bestimmt, indem beispielsweise ein idealer dynamischer Reifenradius abhängig von einem vorgegebenen festen Verhältnis zwischen dem idealen dynamischen Reifenradius und dem unbelasteten Reifenradius bestimmt wird. Abhängig von dem unbelasteten Reifenradius und dem idealen dynamischen Reifenradius kann mit Gleichung (6) eine ideale Differenz berechnet werden. Mit dieser idealen Differenz kann dann mit Gleichung (2) quasi eine ideale Reifensteifigkeit oder Sollreifensteifigkeit berechnet werden. Indem die Reifensteifigkeitsfunktion entsprechend umgestellt wird, kann der Sollreifendruck abhängig von der Sollreifensteifigkeit und der Radlast berechnet werden.

Variante 6

Diese Variante entspricht weitgehend der Variante 5, wobei aber im Gegensatz zur Variante 5 der aktuelle Reifendruck nicht bestimmt wird, so dass nur die Radlast gemessen und der dynamische Reifenradius bestimmt wird. Bei der Erlernung der Reifensteifigkeitsfunktion wird zusätzlich zum Erlernen bzw. Bestimmen der Konstanten auch der aktuelle Reifendruck bestimmt, so dass dann quasi entsprechend der Variante 5 vorgegangen werden kann, um den Sollreifendruck zu bestimmen. Im Vergleich zur Variante 5 ist bei dieser Variante 6 mit einer schlechteren Funktionsqualität zu rechnen. Zum einen wird die Phase, in welcher die Konstanten und der aktuelle Reifendruck erlernt werden, eine im Vergleich zur Variante 5 größere Zeitspanne in Anspruch nehmen. Zum anderen wird der ermittelte aktuelle Reifendruck im Vergleich zur Variante 5 ungenauer ermittelt werden, so dass auch die bestimmte Druckabweichung eine im Vergleich zur Variante 5 geringere Präzision aufweisen wird.

Die gegebenenfalls vorgegebene Funktion zur Bestimmung des Sollreifendrucks abhängig von der Radlast kann spezifisch für jeden Reifen des Fahrzeugs vorliegen. Es ist aber auch möglich, dass diese Funktion für alle Reifen des Fahrzeugs gilt. Im Extremfall ist es möglich, dass die vorgegebene Funktion für alle zulässigen Reifen gilt. In ähnlicher Weise kann die gegebenenfalls vollständig vorgegebene Reifensteifigkeitsfunktion spezifisch für jeden Reifen des Fahrzeugs vorliegen, für alle Reifen des Fahrzeugs oder für alle zulässigen Reifen des Fahrzeugs gelten.

Die vorliegende Erfindung ist für Kraftfahrzeuge, insbesondere Lastwagen, geeignet. Selbstverständlich ist die vorliegende Erfindung nicht auf diesen bevorzugten Anwendungsbereich eingeschränkt, da die vorliegende Erfindung auch bei Flugzeugen sowie spurgeführten Fahrzeugen eingesetzt werden kann.

Im Folgenden wird die vorliegende Erfindung anhand bevorzugter erfindungsgemäßer Ausführungsformen mit Bezug zu den Figuren im Detail beschrieben.

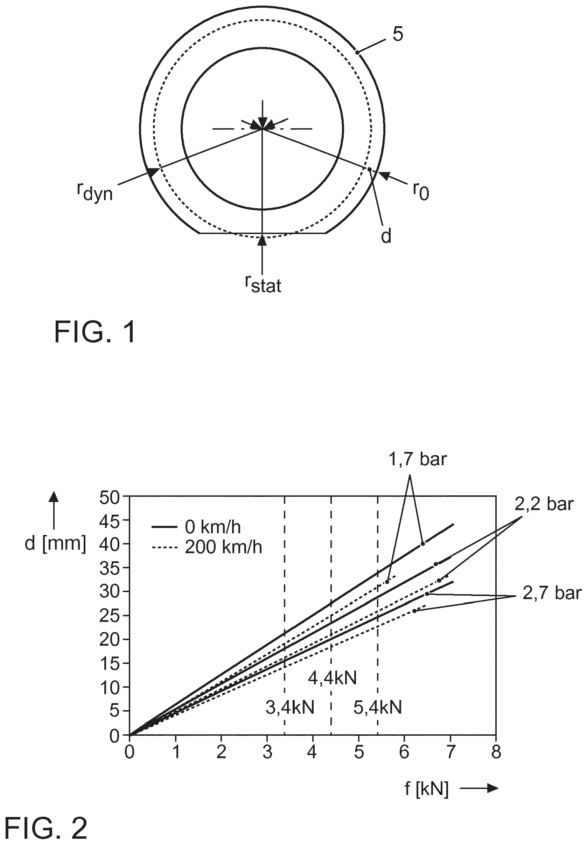

Mit Fig. 1 werden die Begriffe statischer, dynamischer und unbelasteter Reifenradius erläutert.

In Fig. 2 sind erfindungsgemäße Beispiele für die Reifensteifigkeit (Verhältnis zwischen der Differenz zwischen dynamischem und unbelastetem Reifenradius und der Radlast) dargestellt.

In Fig. 3 ist der Flussplan einer erfindungsgemäßen Ausführungsform zur Bestimmung der Druckabweichung zwischen Sollreifendruck und aktuellem Reifendruck dargestellt.

In Fig. 4 ist schematisch ein Fahrzeug mit einem erfindungsgemäßen System dargestellt.

In Fig. 1 ist ein Reifen 5 dargestellt, welcher einen statischen Reifenradius $r_{stat}$, einen dynamischen Reifenradius $r_{dyn}$ und einen unbelasteten Reifenradius $r_0$ aufweist. Der statische Reifenradius $r_{stat}$ bestimmt die kürzeste Entfernung zwischen der Mittelachse 6 des Reifens 5 und der Fahrbahn, auf der das Fahrzeug steht. Der dynamische Reifenradius $r_{dyn}$ kann anhand des Abrollumfangs des Reifens berechnet werden. Der unbelastete Reifenradius $r_0$ ist der größte am Reifen 5 zu messende Radius und entspricht demjenigen Reifenradius, welchen der Reifen 5 im unbelasteten Zustand (d. h., es wirkt keine Radlast auf den Reifen) annimmt. Zusammenfassend gilt folgende Ungleichung (10):

$$r_{stat} < r_{dyn} < r_0 \qquad\qquad (10)$$

Mit dem Bezugszeichen d ist die Differenz oder der Abstand zwischen dem unbelasteten Reifenradius $r_0$ und dem dynamischen Reifenradius $r_{dyn}$ bezeichnet.

In Fig. 2 ist die annähernd lineare Beziehung bzw. das Verhältnis m zwischen der Differenz d und der auf das jeweilige Rad 5 einwirkenden Radlast f für einen bestimmten Reifen bzw. Reifentyp dargestellt. Man erkennt, dass das Verhältnis m bzw. die Beziehung zwischen d und f von dem aktuellen Reifendruck und von der Geschwindigkeit, mit der das Fahrzeug fährt, abhängt. In Fig. 2 ist das Verhältnis m für die Drücke 1,7 bar, 2,2 bar und 2,7 bar und jeweils für eine Geschwindigkeit von 0 km/h (d. h. für den Stillstand) und für eine Geschwindigkeit von 200 km/h angegeben.

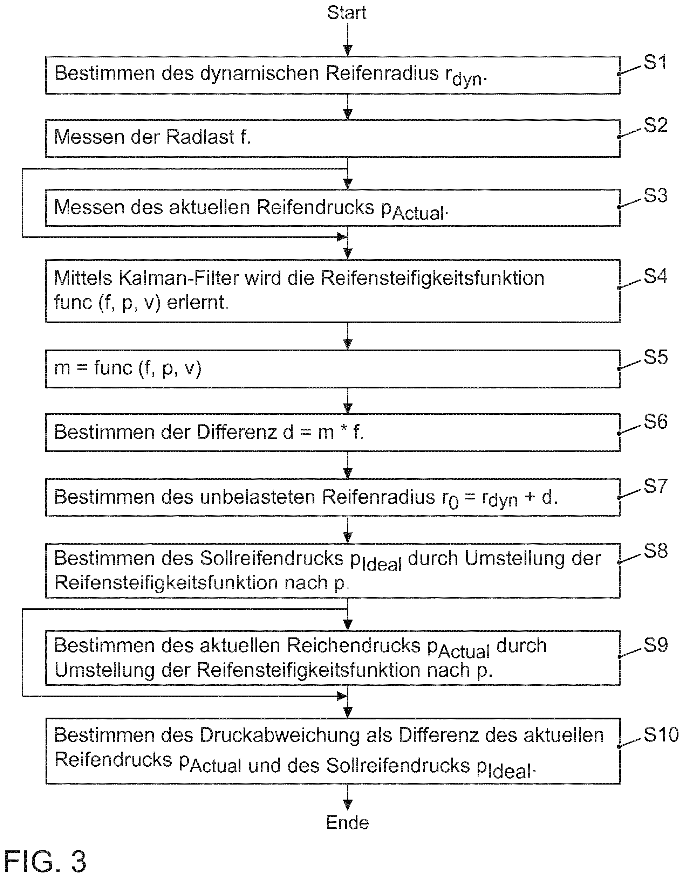

In Fig. 3 ist ein Flussplan eines erfindungsgemäßen Verfahrens zur Bestimmung der Druckabweichung dargestellt.

Im ersten Schritt S1 wird der dynamische Reifenradius $r_{dyn}$ bestimmt. Allgemein gilt, je niedriger der Reifendruck und je höher die Radlast, desto mehr wird der jeweilige Reifen im Bereich, in welchem der Reifen die Fahrbahn berührt, verformt (d. h. desto größer ist der Unterschied zwischen dem dynamischen Reifenradius $r_{dyn}$ und dem unbelasteten Reifenradius $r_0$ und demnach die Differenz d).

Im zweiten Schritt S2 wird die auf den jeweiligen Reifen einwirkende Radlast f bestimmt. Die Radlast f kann dabei mit entsprechenden Sensoren, welche beispielsweise bei einer Luftfederung den Luftdruck innerhalb des entsprechenden Federelements messen, erfasst werden. Bei einer herkömmlichen Federung des Fahrzeugs kann die Radlast f anhand der Auslenkung des entsprechenden Federelements erfasst werden.

Wenn keine entsprechenden Sensoren vorhanden sind, kann die auf den jeweiligen Reifen einwirkende Radlast f manuell beispielsweise vom Fahrer des Fahrzeugs eingegeben werden. Dabei sind Vereinfachungen möglich, indem beispielsweise nur eine Last pro Achse des Fahrzeugs vorgegeben wird und eine symmetrische Lastverteilung vorausgesetzt wird, so dass die vorgegebene Achslast hälftig auf den jeweiligen Reifen einwirkt.

Im dritten Schritt S3 wird der aktuelle Reifendruck des jeweiligen Reifens beispielsweise anhand von im Reifen eingebauten Drucksensoren erfasst. Dieser Schritt S3 ist optional und unterstützt insbesondere die automatische Kalibrierung der Reifenkonstanten bzw. Reifenparameter im folgenden Schritt S4. Darüber hinaus ist ein direkt gemessener Wert für den aktuellen Reifendruck dem in Schritt S9 berechneten Wert vorzuziehen.

Im vierten Schritt S4 wird eine Reifensteifigkeitsfunktion bestimmt, mit deren Hilfe die Reifensteifigkeit, d. h. das Verhältnis m zwischen der Differenz zwischen dem dynamischen Reifenradius $r_{dyn}$ und dem unbelasteten Reifenradius $r_0$ und der auf den jeweiligen Reifen einwirkenden Radlast f, abhängig von der Radlast und dem Reifendruck bestimmt werden kann.

Dazu werden für jeden Reifen des Fahrzeugs über eine bestimmte Zeitspanne hinweg für die Radlast, die Geschwindigkeit und den dynamischen Reifenradius Messwerte erfasst oder ermittelt. Wenn der aktuelle Reifendruck ebenfalls vorliegt, werden entsprechende Messwerte zusätzlich erfasst.

Beispielsweise mit Hilfe eines Kalman-Filters (oder eines ähnlichen Ansatzes) können dann im Vorfeld die Parameter der Reifensteifigkeitsfunktion m = func(f, p, v) anhand der vorab erfassten Messwerte bestimmt werden (siehe Fig. 2). Die mittels des Kalman-Filters abgeschätzten Konstanten bzw. Parameter beschreiben bestimmte Eigenschaften des jeweiligen Reifens oder Reifentyps und definieren die Reifensteifigkeitsfunktion, so dass für die Variablen Reifendruck p, Radlast f und Geschwindigkeit v die Reifensteifigkeit m bestimmt werden kann.

Alternativ kann die Funktion auch in Form einer Datenbasis bereitgestellt werden, in welcher für die verschiedensten Reifentypen jeweils die vorab beschriebene Reifensteifigkeitsfunktion, mit deren Hilfe die Reifensteifigkeit abhängig von dem Reifendruck, der Radlast und der Fahrzeuggeschwindigkeit berechnet werden kann, hinterlegt ist. Weiterhin besteht die Möglichkeit, die Daten, mit welchen die Reifensteifigkeitsfunktion beschrieben wird, beispielsweise auf einem RFID-Tag direkt im oder am Reifen zu hinterlegen und diese Daten berührungslos auszulesen.

Im Schritt S5 wird die Reifensteifigkeit mit der vorab vollständig bestimmten bzw. erlernten Reifensteifigkeitsfunktion berechnet.

Im folgenden Schritt S6 ergibt sich die Differenz d aus dem Produkt der Reifensteifigkeit m und der Radlast f. Anhand der Differenz d kann im nächsten Schritt S7 der unbelastete Reifenradius $r_0$ durch eine Addition des dynamischen Reifenradius $r_{dyn}$ mit der Differenz d berechnet werden.

Anhand eines Optimierungskriteriums wird im nächsten Schritt S8 der für die aktuell anliegende Radlast optimale Reifendruck bzw. Sollreifendruck berechnet. Dieses Kriterium liegt entweder in der Reifendatenbank explizit als Abbildung (Funktion oder Kennlinie) $p_{Ideal}$(f) vor, oder es wird eine allgemein nutzbare Nährung verwendet (beispielsweise ein vorgegebenes Verhältnis $r_{Ideal}/r_0$). Durch Umstellen und Ausrechnen der vorab bestimmten Reifensteifigkeitsfunktion nach p kann mit Hilfe der umgestellten Reifensteifigkeitsfunktion der Sollreifendruck abhängig von der Radlast bestimmt werden.

Wenn der aktuelle Reifendruck $p_{Actual}$ in Schritt S3 nicht gemessen wird, kann er in Schritt S9 berechnet werden. Dazu wird die Reifensteifigkeit abhängig von dem dynamischen Reifenradius $r_{dyn}$ und der Radlast f berechnet. Dann wird die Reifensteifigkeitsfunktion nach p umgestellt, so dass mit der umgestellten Funktion abhängig von der Radlast, der Geschwindigkeit und der Reifensteifigkeit der aktuelle Reifendruck berechnet werden kann.

Im Schritt S10 wird die Druckabweichung als Differenz des Solldrucks $p_{Ideal}$ und des aktuellen Reifendrucks $p_{Actual}$ berechnet. Diese Druckabweichung wird überwacht, und gegebenenfalls wird der Fahrer informiert bzw. gewarnt oder es wird der aktuelle Druck mittels einer automatischen Druckanpassungseinrichtung entsprechend angepasst.

Die Schritte S5 bis S10 können periodisch wiederholt werden.

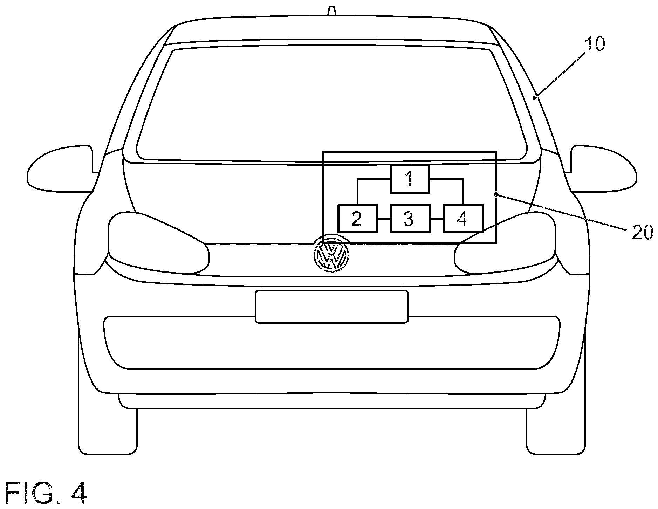

In Fig. 4 ist schematisch ein erfindungsgemäßes Fahrzeug mit einem erfindungsgemäßen System 20 dargestellt. Das erfindungsgemäße System 20 umfasst eine Steuerung 1, einen Reifendrucksensor 2, einen Kraftsensor 3 und einen Geschwindigkeitssensor 4.

**Bezugszeichenliste**

| 1 | Steuerung |
|---|---|
| 2 | Reifendrucksensor |
| 3 | Kraftsensor |
| 4 | Geschwindigkeitssensor |
| 5 | Reifen |
| 6 | Reifenmittelachse |
| 10 | Fahrzeug |
| 20 | System |
| d | Differenz ($r_0 - r_{dyn}$) |
| f | Radlast |
| m | Reifensteifigkeit |
| $p_{Actual}$ | aktueller Reifendruck |
| $p_{Ideal}$ | Sollreifendruck |
| $r_0$ | Reifenradius im unbelasteten Zustand |
| $r_{dyn}$ | dynamischer Reifenradius |
| $r_{stat}$ | statischer Reifenradius |
| $S_1$-$S_{10}$ | Verfahrensschritt |

**Patentansprüche**

1. Verfahren zur Bestimmung einer Druckabweichung ($p_{Rel}$) zwischen einem Sollreifendruck ($p_{Ideal}$) und einem aktuellen Reifendruck ($p_{Actual}$) für einen Reifen (5) eines Fahrzeugs (10), die Schritte umfassend:

   Ermitteln einer Radlast (f) für den Reifen (5),
   Ermitteln eines dynamischen Reifenradius ($r_{dyn}$) des Reifens (5), und
   Bestimmen der Druckabweichung abhängig von der Radlast (f) und dem dynamischen Reifenradius ($r_{dyn}$),
   wobei ein unbelasteter Reifenradius ($r_0$) des Reifens (5) im unbelasteten Zustand vorgegeben wird,
   wobei der aktuelle Reifendruck ($p_{Actual}$) abhängig von der Radlast (f), von dem unbelasteten Reifenradius ($r_0$) und von dem dynamischen Reifenradius ($r_{dyn}$) mittels einer Reifensteifigkeitsfunktion berechnet wird.

2. Verfahren nach Anspruch 1,
   **dadurch gekennzeichnet,**
   **dass** der Sollreifendruck ($p_{Ideal}$) mittels einer Sollreifendruckfunktion abhängig von der Radlast (f) bestimmt wird.

3. Verfahren nach Anspruch 1 oder 2,
   **dadurch gekennzeichnet,**
   **dass** die Reifensteifigkeitsfunktion vorgegeben wird, durch welche eine Reifensteifigkeit (m) des Reifens (5) abhängig von der Radlast (f), dem aktuellen Reifendruck ($p_{Actual}$) und einer Geschwindigkeit (v), mit welcher das Fahrzeug (10) aktuell fährt, berechenbar ist, und
   **dass** Konstanten der Reifensteifigkeitsfunktion erlernt werden, indem für mehrere Zeitpunkte Messwerte für die Geschwindigkeit (v) und die Radlast (f) ermittelt werden und indem für diese Messwerte die Konstanten derart bestimmt werden, dass ein Schätzfehler minimiert wird.

4. Verfahren nach Anspruch 3,
   **dadurch gekennzeichnet,**
   **dass** der aktuelle Reifendruck ($p_{Actual}$) als Konstante angesehen wird und beim Erlernen der Konstanten mit erlernt wird.

5. Verfahren nach einem der vorhergehenden Ansprüche,
   **dadurch gekennzeichnet,**

**dass** die Reifensteifigkeit m mittels der Reifensteifigkeitsfunktion bestimmt wird, und dass der unbelastete Reifenradius $r_0$ durch folgende Gleichung abhängig von dem dynamischen Reifenradius $r_{dyn}$, der Radlast f und der Reifensteifigkeit m ermittelt wird:

$$r_0 = r_{dyn} + m*f.$$

6. Verfahren nach einem der vorhergehenden Ansprüche,
   **dadurch gekennzeichnet,**
   **dass** ein idealer dynamischer Reifenradius ($r_{Ideal}$) vorgegeben wird, und
   **dass** der Sollreifendruck ($p_{Ideal}$) abhängig von dem idealen dynamischen Reifenradius ($r_{Ideal}$) mittels der Reifensteifigkeitsfunktion bestimmt wird.

7. Verfahren zur Bestimmung einer Radlast (f) für einen Reifen (5) eines Fahrzeugs (10), die Schritte umfassend:

   Ermitteln des aktuellen Reifendrucks ($p_{Actual}$),
   Ermitteln eines dynamischen Reifenradius ($r_{dyn}$) des Reifens (5),
   Vorgeben eines unbelasteten Reifenradius ($r_0$) des Reifens (5) im unbelasteten Zustand, und
   Bestimmen der Radlast (f) für den Reifen (5) abhängig von dem aktuellen Reifendruck ($p_{Actual}$), von dem dynamischen Reifenradius ($r_{dyn}$) und von dem unbelasteten Reifenradius ($r_0$) mittels einer Reifensteifigkeitsfunktion
   **dadurch gekennzeichnet,**
   **dass** eine erste Beziehung zwischen einer Reifensteifigkeit m und der Radlast f anhand des dynamischen Reifenradius $r_{dyn}$ und des unbelasteten Reifenradius $r_0$ über folgende Gleichung (1) bestimmt wird:

   $$m = \frac{r_0 - r_{dyn}}{f} \qquad (1)$$

   wobei mittels der Reifensteifigkeitsfunktion eine zweite Beziehung zwischen der Reifensteifigkeit (m) und der Radlast (f) bestimmt wird, und
   wobei anhand der ersten und zweiten Beziehung sowohl die Reifensteifigkeit (m) als auch die Radlast (f) bestimmt werden.

8. System zur Bestimmung einer Druckabweichung ($p_{Rel}$) zwischen einem Sollreifendruck ($p_{Ideal}$) und einem aktuellen Reifendruck ($p_{Actual}$) für einen Reifen (5) eines Fahrzeugs (10),
   wobei das System (20) eine Steuerung (1) umfasst,
   wobei das System (20) ausgestaltet ist, um einen dynamischen Reifenradius ($r_{dyn}$) des Reifens (5) und um eine Radlast (f) für den Reifen (5) zu ermitteln, und
   wobei das System (20) ausgestaltet ist, um mittels der Steuerung (1) die Druckabweichung abhängig von der Radlast (f) und von dem dynamischen Reifenradius ($r_{dyn}$) zu bestimmen,
   wobei dem System (20) ein unbelasteter Reifenradius (ro) des Reifens (5) im unbelasteten Zustand vorgegeben ist,
   wobei das System (20) ausgestaltet ist, um den aktuellen Reifendruck ($p_{Actual}$) abhängig von der Radlast (f), von dem unbelasteten Reifenradius ($r_0$) und von dem dynamischen Reifenradius ($r_{dyn}$) mittels einer Reifensteifigkeitsfunktion zu berechnen.

## Claims

1. A method for determining a pressure deviation ($p_{Rel}$) between a target tire pressure ($p_{ideal}$) and a current tire pressure ($p_{Actual}$) for a tire (5) of a vehicle (10), comprising the steps:

   Determination of a wheel load (f) for the tire (5),
   determination of a dynamic tire radius ($r_{dyn}$) of the tire (5), and
   determination of the pressure deviation depending on the wheel load (f) and the dynamic tire radius ($r_{dyn}$),
   wherein an unloaded tire radius ($r_0$) of the tire (5) is specified in the unloaded state,
   wherein the current tire pressure ($p_{Actual}$) is calculated depending on the wheel load (f), the unloaded tire radius

($r_0$) and the dynamic tire radius ($r_{dyn}$) by means of a tire stiffness function.

2. The method according to Claim 1,
**characterized in**
**that** the target tire pressure ($p_{ideal}$) is determined by a target tire pressure function depending on the wheel load (f).

3. The method according to Claim 1 or 2,
**characterized in**
**that** the tire stiffness function is specified, through which a tire stiffness (m) of the tire (5) can be calculated depending on the wheel load (f), the current tire pressure ($p_{Actual}$) and a velocity (v), with which the vehicle (10) is currently driving, and
**that** constants of the tire stiffness function are learned, when measured values for the velocity (v) and the wheel load (f) are determined for several points in time and when the constants are determined for said measured values in such a manner that an estimation error is minimized.

4. The method according to Claim 3,
**characterized in**
**that** the current tire pressure ($p_{Actual}$) is regarded as constant and is learned when learning the constants.

5. The method according to any one of the preceding claims,
**characterized in**
**that** the tire stiffness m is determined by means of the tire stiffness function, and that the unloaded tire radius $r_0$ is determined by the following equation depending on the dynamic tire radius $r_{dyn}$, the wheel load f and the tire stiffness m:

$$r_0 = r_{dyn} + m*f.$$

6. The method according to any one of the preceding claims,
**characterized in**
**that** an ideal dynamic tire radius ($r_{Ideal}$) is specified, and
**that** the target tire pressure ($p_{ideal}$) is determined depending on the ideal dynamic tire radius ($r_{ideal}$) by means of the tire stiffness function.

7. A method for determining a wheel load (f) for a tire (5) of a vehicle (10), comprising the steps:

Determination of the current tire pressure ($p_{Actual}$),
determination of a dynamic tire radius ($r_{dyn}$) of the tire (5),
specification of an unloaded tire radius ($r_0$) of the tire (5) in the unloaded state, and
determination of a wheel load (f) for the tire (5) depending on the current tire pressure ($p_{Actual}$), the dynamic tire radius ($r_{dyn}$) and the unloaded tire radius ($r_0$) by means of a tire stiffness function
**characterized in**
**that** a first relationship between a tire stiffness m and the wheel load f is determined by means of the dynamic tire radius $r_{dyn}$ and the unloaded tire radius $r_0$ by means of the following equation (1):

$$m = \frac{r_0 - r_{dyn}}{f} \qquad (1)$$

wherein by means of the tire stiffness function a second relationship between the tire stiffness (m) and the wheel load (f) is determined, and
wherein by means of the first and second relationship both the tire stiffness (m) as well as the wheel load (f) are determined.

8. A system for determining a pressure deviation ($p_{Rel}$) between a target tire pressure ($p_{ideal}$) and a current tire pressure (p$_{Actual}$) for a tire (5) of a vehicle (10),
wherein the system (20) comprises a control (1),
wherein the system (20) is configured in order to determine a dynamic tire radius (r$_{dyn}$) of the tire (5) and in order to determine a wheel load (f) for the tire (5), and
wherein the system (20) is configured to determine the pressure deviation depending on the wheel load (f) and the dynamic tire radius (r$_{dyn}$) by means of the control (1),
wherein the system (20) is given an unloaded tire radius (r$_0$) of the tire (5) in the unloaded state,
wherein the system (20) is configured, in order to calculate the current tire pressure (p$_{Actual}$) depending on the wheel load (f), the unloaded tire radius (r$_0$) and the dynamic tire radius (r$_{dyn}$) by means of a tire stiffness function.

**Revendications**

1. Procédé de détermination d'un écart de pression (p$_{Rel}$) entre une pression de pneu de consigne (p$_{Ideal}$) et une pression de pneu actuelle (p$_{Actual}$) pour un pneu (5) d'un véhicule (10), les étapes comprenant :

   la détermination d'une charge sur roue (f) pour le pneu (5),
   la détermination d'un rayon de pneu dynamique (r$_{dyn}$) du pneu (5) et
   la détermination de l'écart de pression en fonction de la charge sur roue (f) et du rayon de pneu dynamique (r$_{dyn}$),
   un rayon de pneu non chargé (r$_0$) du pneu (5) étant prédéterminé dans l'état non chargé,
   la pression de pneu actuelle (p$_{Actual}$) étant calculée en fonction de la charge sur roue (f) du rayon de pneu non chargé (r$_0$) et du rayon de pneu dynamique (r$_{dyn}$) au moyen d'une fonction de rigidité du pneu.

2. Procédé selon la revendication 1,
   **caractérisé en ce que**
   la pression de pneu de consigne (p$_{Ideal}$) est déterminée au moyen d'une fonction de pression de pneu de consigne en fonction de la charge sur roue (f).

3. Procédé selon la revendication 1 ou 2,
   **caractérisé en ce que**
   la fonction de rigidité de pneu est prédéterminée, par l'intermédiaire de laquelle une rigidité (m) du pneu (5) peut être calculée en fonction de la charge sur roue (f), de la pression de pneu actuelle (p$_{Actual}$) et d'une vitesse (v) avec laquelle le véhicule (10) se déplace actuellement et
   des constantes de la fonction de rigidité du pneu sont apprises grâce au fait que, pour plusieurs moments, des valeurs de mesure pour la vitesse (v) et la charge sur roue (f) sont déterminées et grâce au fait que, pour ces valeurs de mesure, les constantes sont déterminées de façon à ce qu'une erreur d'estimation soit minimisée.

4. Procédé selon la revendication 3,
   **caractérisé en ce que**
   la pression de pneu actuelle (p$_{Actual}$) est considérée comme une constante et est apprise lors de l'apprentissage des constantes.

5. Procédé selon l'une des revendications précédentes,
   **caractérisé en ce que**
   la rigidité du pneu m est déterminée au moyen de la fonction de rigidité de pneu et
   le rayon de pneu non chargé r$_0$ est déterminé par l'équation suivante en fonction du rayon de pneu dynamique r$_{dyn}$, de la charge sur roue f et de la rigidité du pneu m :

$$r_0 = r_{dyn} + m*f.$$

6. Procédé selon l'une des revendications précédentes,
   **caractérisé en ce que**
   un rayon de pneu dynamique idéal (r$_{Ideal}$) est prédéterminé et
   la pression de pneu de consigne (p$_{Ideal}$) est déterminée en fonction du rayon de pneu dynamique idéal (r$_{Ideal}$) au moyen de fonction de rigidité du pneu.

7. Procédé pour la détermination d'une charge sur roue (f) pour un pneu (5) d'un véhicule (10), qui comprend les étapes suivantes :

détermination de la pression de pneu actuelle ($p_{Actual}$),
détermination d'un rayon de pneu dynamique ($r_{dyn}$) du pneu (5),
prédétermination d'un rayon de pneu non chargé ($r_0$) du pneu (5) dans l'état non chargé et
détermination de la charge sur roue (f) pour le pneu (5) en fonction de la pression de pneu actuelle ($p_{Actual}$), du rayon de pneu dynamique ($r_{dyn}$) et du rayon de pneu non chargé ($r_0$) au moyen d'une fonction de rigidité du pneu,
**caractérisé en ce que**
une première relation entre une rigidité du pneu m et la charge sur roue f est déterminée à l'aide du rayon de pneu dynamique $r_{dyn}$ et du rayon de pneu non chargé $r_0$ par l'intermédiaire de l'équation (1) suivante :

$$m = \frac{r_0 - r_{dyn}}{f} \qquad (1)$$

moyennant quoi, au moyen de la fonction de rigidité du pneu, une deuxième relation est déterminée entre la rigidité du pneu (m) et la charge sur roue (f) et
moyennant quoi, à l'aide des première et deuxième relations, la rigidité du pneu (m) ainsi que la charge sur roue (f) sont déterminées.

8. Système pour la détermination d'un écart de pression ($p_{Rel}$) entre une pression de pneu de consigne ($p_{Ideal}$) et une pression de pneu actuelle ($p_{Actual}$) pour un pneu (5) d'un véhicule (10), le système (20) comprenant une commande (1),
le système (20) étant conçu pour déterminer un rayon de pneu dynamique ($r_{dyn}$) du pneu (5) et une charge sur roue (f) pour le pneu (5) et
le système (20) étant conçu pour déterminer, au moyen de la commande (1), l'écart de pression en fonction de la charge sur roue (f) et du rayon de pneu dynamique ($r_{dyn}$),
un rayon de pneu non chargé ($r_0$) du pneu (5) dans l'état non chargé étant prédéterminé dans le système (20),
le système (20) étant conçu pour calculer la pression de pneu actuelle ($p_{Actual}$) en fonction de la charge sur roue (f), du rayon de pneu non chargé ($r_0$) et du rayon de pneu dynamique ($r_{dyn}$) au moyen d'une fonction de rigidité du pneu.

FIG. 1

FIG. 2

Start

Bestimmen des dynamischen Reifenradius $r_{dyn}$. — S1

Messen der Radlast f. — S2

Messen des aktuellen Reifendrucks $p_{Actual}$. — S3

Mittels Kalman-Filter wird die Reifensteifigkeitsfunktion func (f, p, v) erlernt. — S4

m = func (f, p, v) — S5

Bestimmen der Differenz d = m * f. — S6

Bestimmen des unbelasteten Reifenradius $r_0 = r_{dyn} + d$. — S7

Bestimmen des Sollreifendrucks $p_{Ideal}$ durch Umstellung der Reifensteifigkeitsfunktion nach p. — S8

Bestimmen des aktuellen Reichendrucks $p_{Actual}$ durch Umstellung der Reifensteifigkeitsfunktion nach p. — S9

Bestimmen des Druckabweichung als Differenz des aktuellen Reifendrucks $p_{Actual}$ und des Sollreifendrucks $p_{Ideal}$. — S10

Ende

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030121319 A1
- EP 1880874 A2
- US 20100180677 A1
- EP 2722202 A1
- DE 102009057578 A1
- DE 102009057579 A1
- DE 10352539 B4
- DE 102006020490 A1